# EUROPÄISCHE PATENTSCHRIFT

(11) **EP 0 596 230 B1**
(45) Veröffentlichungstag und Bekanntmachung des Hinweises auf die Patenterteilung: **04.12.1996**
(21) Anmeldenummer: 93115175.7
(22) Anmeldetag: 21.09.1993
(51) Int. Cl.: F16L 21/025

(54) **Steckverbindung von Rohrstücken**
Spigot and socket connector for pipes
Raccord à fiches pour tuyaux

(30) Priorität: 05.11.1992 DE 9215089 U
(43) Veröffentlichungstag der Anmeldung: 11.05.1994
(73) Patentinhaber: Siegwart, Emil, D-66295 Friedrichsthal (DE)
(72) Erfinder: Siegwart, Emil, D-66295 Friedrichsthal (DE)
(74) Vertreter: Eitle, Werner, Dipl.-Ing.

(56) Entgegenhaltungen:
- DE-A- 2 758 341
- FR-A- 1 049 913
- FR-A- 2 285 566

## Beschreibung

Die Erfindung betrifft eine Steckverbindung von zwei Rohrstücken nach dem Oberbegriff des Patentanspruchs 1. Eine derartige Steckverbindung ist aus der FR-A-1 049 913 bekannt.

Aus der DE-A-27 58 341 ist ein Formstück für eine dichtende Steckverbindung von Leitungen bekannt. Hierbei rollt bei einer Ausführungsform dieses Formstückes ein Dichtungsring auf einem ebenen Sickengrund ab, wobei der Beginn und die Länge des Abrollweges des Dichtringes beliebig vorgewählt werden können. Bei einer weiteren Ausführungsform ist dieser Sickengrund gewellt, d.h. er hat mehrere axial nebeneinanderliegende kreisförmig verlaufende Vertiefungen und Erhebungen, wodurch der Dichtungsring vor dem Einstecken in eine beliebige Ausgangsvertiefung eingelegt werden kann.

Eine weitere Steckverbindung ist durch das DE-GBM 78 24 525 bekannt. Bei dieser bekannten Steckverbindung sind eine Ausgangsrille und eine Rastrille mit dazwischen befindlichem Überrollabschnitt an beiden Enden eines rohrförmigen Verbindungsstückes vorgesehen, auf welche die miteinander zu verbindenden Rohrstücke aufgeschoben sind.

An den beiden Enden des Verbindungsstücks sind radial nach außen ragende, umlaufende Zentrierrippen vorgesehen, die zur Verkleinerung des Spiels zwischen dem Verbindungsstück und den aufgeschobenen Rohrstücken dienen sollen und welche ein zu starkes Zusammenpressen des Dichtungsringes verhindern sollen. Diese Zentrierrippen verhindern jedoch auch ein einfaches Aufschieben der Rohrstücke auf das Verbindungsstück, insbesondere dann, wenn die Rohrstücke und das Verbindungsstück nicht exakt im Querschnitt absolut kreisrund ohne Deformation hergestellt worden sind.

Der Erfindung liegt daher die Aufgabe zugrunde, eine Steckverbindung nach dem Oberbegriff des Patentanspruchs 1 derart weiterzubilden, daß sie eine ausreichend exakte Zentrierung der ineinander zu schiebenden Rohrstücke mit optimaler Abdichtung des Ringspaltes zwischen diesen Rohrstücken ermöglicht. Dabei soll die Verbindung so sein, daß sie ein problemloses Übereinanderschieben der zu verbindenden Rohrstücke gewährleistet und andererseits ausreichenden Widerstand gegen ein nachträgliches Wiederauseinanderschieben der Rohrstücke infolge eines in dem Rohr auftretenden Innendruckes bietet.

Die Lösung dieser Aufgabe erfolgt durch die Merkmale des Patentanspruchs 1.

Weitere Ausgestaltungen der erfindungsgemäßen Steckverbindung ergeben sich aus den Unteransprüchen.

In der Zeichnung sind Ausführungsbeispiele der erfindungsgemäßen Steckverbindung dargestellt, die im folgenden näher beschrieben werden:
- Fig. 1: zeigt einen axialen Längsschnitt durch eine Steckverbindung zwischen zwei auf ein rohrförmiges Verbindungsstück aufgeschobenen Abschnitten von glattwandigen Wickelfalzrohren in einer ersten Ausführungsform;
- Fig. 2 und 3: veranschaulichen Details X und Y in Fig. 1 in größerem Maßstab;
- Fig. 4: zeigt einen axialen Längsschnitt durch eine Steckverbindung zwischen zwei gewellten Rohrabschnitten und einem rohrförmigen Verbindungsstück;
- Fig. 5 und 6: zeigen Details X und Y von Fig. 4 in größerem Maßstab;
- Fig. 7: zeigt einen axialen Längsschnitt durch eine Steckverbindung zwischen zwei übereinander geschobenen Abschnitten eines glattwandigen Rohres;
- Fig. 8: zeigt einen axialen Längsschnitt durch eine Steckverbindung zwischen zwei ineinander geschobenen Rohrstücken in einer weiteren Ausführungsform, von welchen ein Rohrstück einen Rohrkrümmer bildet.

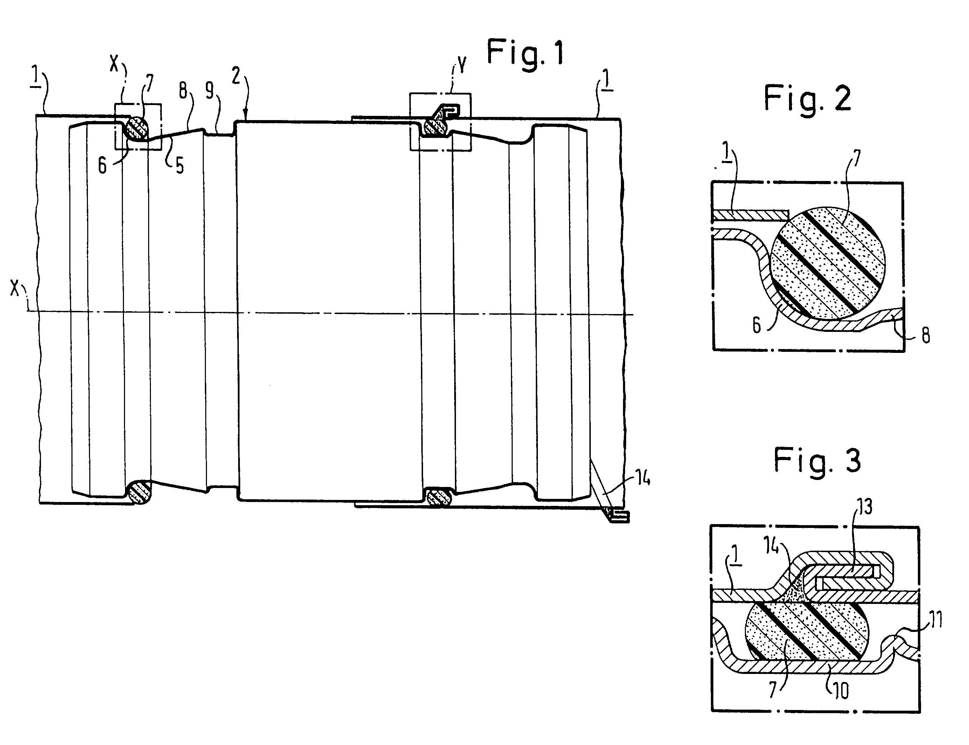

Bei der in Fig. 1 bis 3 dargestellten Steckverbindung zweier glattwandiger Wickelfalzrohre 1 ist ein rohrförmiges Verbindungsstück 2 vorgesehen, auf dessen Stirnenden Abschnitte von Wickelfalzrohren aufgeschoben sind. In der Nähe ihrer beiden Enden besitzt das Verbindungsstück 2 je eine Einziehung 5, die an ihrem dem jeweiligen Stirnende benachbarten Rand eine Ausgangsrille 6 für die Aufnahme eines Dichtungsringes 7 bildet, an die sich ein zur Mitte des Verbindungsstückes hin konisch erweiternder Wandabschnitt 8 anschließt. Gegenüber dem Beginn dieses Wandabschnitts 8 ist die Ausgangsrille 6 geringfügig vertieft (siehe Fig. 2).

An den konischen Wandabschnitt 8 schließt sich eine Rastrille 9 an, die einen zur Achse X des Verbindungsstücks 2 parallelen Boden 10 (Fig. 3) hat. Dieser Boden hat größeren Durchmesser in bezug auf die Rohrachse X als der Boden der Ausgangsrille 6. Die dem konischen Wandabschnitt 8 benachbarte Seitenwand dieser Rastrille 9 erstreckt sich über einen wesentlichen Teil ihrer Höhe etwa senkrecht zur Rohrachse X, wobei sie an ihrem äußeren an den konischen Wandabschnitt 8 anschließenden Rand mit einer nahezu scharfkantigen Schulter 11 ausgestattet ist, die gegenüber dem anschließenden Rand des Wandabschnittes 8 überhöht ist (Fig. 3).

In der linken Hälfte von Fig. 1 ist die Steckverbindung bei Beginn des Aufschiebens des aus einem Wickelfalzrohr bestehenden Rohrabschnitts 1 dargestellt, während in der rechten Hälfte dieser Figur die Steckverbindung in endgültigem Zustand gezeigt ist. Zu Beginn des Aufschiebens des Rohrabschnitts 1 auf das Verbindungsstück 2 befindet sich der zur Abdichtung des Ringspaltes vorgesehene Dichtungsring 7 in der Ausgangsrille 6 des Verbindungsstücks 2, wobei der Dichtungsring radial etwas über das benachbarte äußere Ende des Verbindungsstücks 2 so weit hinausragt, daß er beim Aufschieben des Rohrabschnitts 1 von diesem erfaßt und zum Überrollen auf dem konischen Wandungabschnitt 8 bis zum Einrasten in die Rastrille 9 gebracht wird, wobei der Dichtungsring zunehmend in radialer Richtung zusammengepreßt wird. Dabei überrollt er unter Erhöhung seines Rollwiderstandes die erhöhte Schulter 11 am Rand der Rastrille 9. Ein weiteres Aufschieben wird durch Anschlagen des zusammengespreßten Dichtungsringes 7 an der hinteren Seitenwand der Rastrille verhindert.

In der Rastrille 9 ist der auf etwa die Hälfte oder etwas weniger als die Hälfte seines ursprünglichen Durchmessers zusammengepreßt. Dies wird dadurch erreicht, daß der Abstand des Bodens 10 der Rastrille 9 von der Wandung des aufgeschobenen Rohrabschnitts 1 der Hälfte oder etwas weniger als der Hälfte des ursprünglichen kreisrunden Durchmessers des Dichtungsringes 7 entspricht. Hierdurch ergibt sich eine erhebliche Widerstandskraft des Dichtungsringes gegen ein nachträgliches Verschieben des Rohrabschnitts 1 gegenüber dem Verbindungsstück 2, wobei ein Zurückschieben noch durch die senkrechte Ausrichtung und Höhe der der Ausgangsrille 6 zugewandten Seitenwand der Rastrille und die daran anschließende erhöhte, ziemlich scharfkantige Schulter 11 erschwert wird. Die Höhe dieser Seitenwand ist so bemessen, daß sie etwa ein Viertel des ursprünglichen kreisrunden Rohrdurchmessers des ungepreßten Dichtungsringes oder etwa die Hälfte des Abstandes zwischen dem Boden 10 der Rastrille 9 und der gegenüberliegenden Wand des aufgeschobenen Rohrabschnittes 1 entspricht.

Durch das relativ starke Zusammenpressen des Dichtungsringes in Verbindung mit der steilen, eine erhöhte Schulter 11 aufweisenden Seitenwand der Rastrille 9 wird erreicht, daß selbst beim Auftreten einer durch Innendruck erzeugten axialen Schubkraft auf die aufgeschobenen Rohrabschnitte 2 vom Verbindungsstück 1 weg der Dichtungsring 7 aus der Rastnut 9 nicht herausrollt und damit den aufgeschobenen Rohrabschnitt auf dem Verbindungsstück fixiert. Dies wird auch wesentlich dadurch gewährleistet, daß die Breite des Bodens 10 der Rastrille bei dem dargestellten Ausführungsbeispiel größer ist als die Breite des in dieser Sicke oder Rille befindlichen, auf etwa die Hälfte seines ursprünglichen Durchmessers zusammengepreßten Dichtungsringes 7. Dadurch kann sich der Dichtungsring bei seinem radialen Zusammenpressen axial ungehindert ausdehnen, wodurch sichergestellt wird, daß sein Gefüge auch beim Anrollen gegen die eine oder andere Seitenwand dieser Rille nicht beschädigt oder zerstört wird, wie dies bei einem allseitig zusammengepreßten Dichtungsring der Fall wäre.

Die radiale Spreizkraft, die der zusammengepreßte Dichtungsring 7 einerseits auf das Verbindungsstück 2 und andererseits auf den aufgeschobenen Rohrabschnitt 1 ausübt, ist so groß, daß ein relativ großer radialer Abstand (Ringspalt) zwischen diesen beiden Rohrstücken überbrückt werden kann. Darüber hinaus gewährleistet diese Spreizkraft einen gleichmäßigen Abstand über den gesamten Spaltumfang, so daß auch relativ dünnwandige Rohrstücke mit relativ geringer Steifigkeit durch den Anpreßdruck des Dichtungsrings nicht verformt werden. Aber selbst Rohrstücke mit geringfügigen Unrundheiten, kleinen Beulen usw. können durch den zusammengepreßten Dichtungsring noch ausreichend gegeneinander abgedichtet werden.

Das in Fig. 3 dargestellte Detail zeigt die Lage des Dichtungsringes 7 im Bereich der wendelförmigen Falznaht 13 des aus einem Wickelfalzrohr bestehenden aufgeschobenen Rohrabschnitts 1. Um auch an dieser Stelle eine gute Abdichtung zwischen dem Dichtungsring und dem Rohrabschnitt 1 zu erhalten, ist die Falzrille mit einer elastischen Dichtungsmasse 14 ausgefüllt.

Der Dichtungsring besteht bei dem dargestellten Ausführungsbeispiel aus einer Dichtungsrundschnur, die in der oben geschilderten Weise von der Ausgangsrille 6 über den Wandabschnitt 8 in die Rastrille 9 überrollen kann. Er besteht zweckmäßig aus Moosgummi oder Schaumgummi mit geschlossenen Zellen und einer glatten Außenhaut.

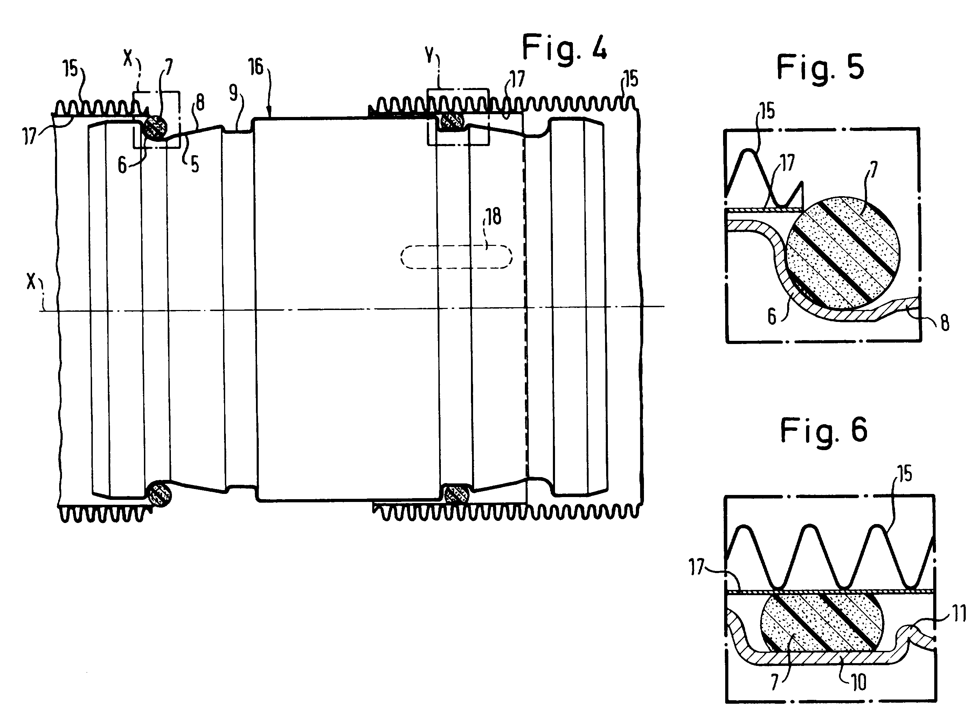

Bei dem in Fig. 4 bis 6 dargestellten Ausführungsbeispiel sind zwei aus Wellrohren bestehende Rohrabschnitte 15 mit einem Verbindungsstück 16 verbunden, welches die gleiche Ausgestaltung wie das Verbindungsstück 2 in Fig. 1 hat. Die jeweils gleichen Teile dieser Verbindungsstücke sind in der Zeichnung mit gleichen Bezugsziffern versehen. Um eine gute Abdichtung zwischen dem Dichtungsring 7 und dem aufgeschobenen Rohrabschnitt 15 zu erreichen, sind die beiden Rohrabschnitte 15 jeweils an ihrem aufgeschobenen Ende an der Innenseite ihrer Wandung mit einer selbstklebenden Folie 17 versehen. Hierdurch wird den Wellrohrabschnitten 15 an den Enden eine glatte Innenfläche gegeben, die ein sattes und gut abdichtendes Anliegen des flachgepreßten Dichtungsringes 7 gestattet. Die Innenfolie 17 kann aus einer Aluminiumfolie von einer Stärke von bis zu 0,1 mm oder aus einem dünnen Kunststoffband bestehen.

Da Wellrohre heute in der Regel durch schraubenlinienförmiges Wickeln von gewellten Bändern hergestellt werden, gilt es zu vermeiden, daß durch die schraubenlinienförmig umlaufenden Wellen, die sich aufgrund ihrer Windungen über die axiale Länge der eingeklebten Innenfolie 17 hinauserstrecken, Undichtigkeiten entstehen. Um dies zu vermeiden, ist bei dem dargestellten Ausführungsbeispiel eine Leckagesperre 18 aus einer plastischen Dichtungsmasse vorgesehen, die in Form eines länglichen raupenförmigen Streifens in die Wellen zwischem dem Wellrohr und der in diesen eingelegte Folie 17 in der Breite einer Wicklungssteigung eingebracht ist. Die Dichtungsmasse kann mittels Tube in die Wellen des Wellrohres eingebracht oder auf die Wellen aufgetragen werden, worauf sie beim Einkleben der Innenfolie 17 in die Wellen des Wellrohres eingedrückt wird.

Die erfindungsgemäße Ausbildung der Steckverbindung macht es möglich, daß Dichtungsringe mit verschieden großem Durchmesser verwendet werden können, um unterschiedlich große Ringspalte zwischen dem Verbindungsrohrstück und den aufzuschiebenden Rohrabschnitten oder größere Haftungskräfte zwischen den Rohrstücken in axialer Richtung zu ermöglichen. Damit wird es nur bei sehr hohen Innendrücken notwendig sein, die Steckverbindung in axialer Richtung durch Verbindungsnieten oder -schrauben gegen axiales Auseinanderschieben zu sichern.

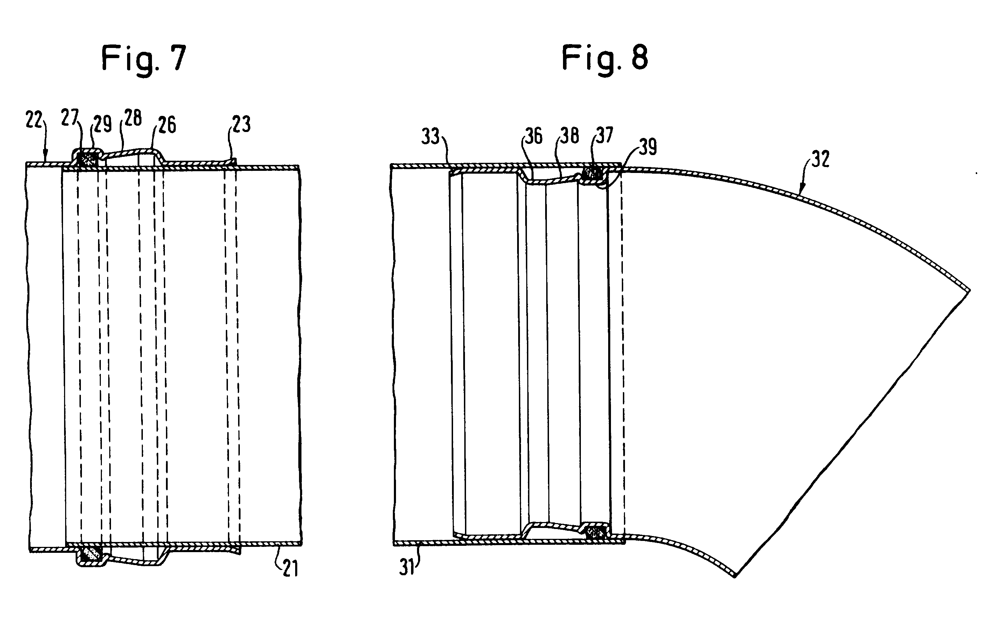

Bei dem in Fig. 7 dargestellten Ausführungsbeispiel ist die Steckverbindung zwischen zwei Rohrstücken dadurch hergestellt, daß die beiden zu verbindenden Rohrstücke unmittelbar, also ohne ein dazwischen befindliches Verbindungsstück ineinandergeschoben sind. In diesem Fall besitzt das auf das eine Ende des Rohrstückes 21 aufgeschoben andere Rohrstück 22 an seinem aufgeschobenen Ende eine Ausgangsrille 26 und eine Rastrille 29 mit dazwischen befindlichem Überrollwandabschnitt 28 für den Dichtring 27, welche Rillen und welcher Überrollwandabschnitt nicht durch eine Einziehung, sondern durch eine Aufweitung des Durchmessers dieses Rohrstückes gebildet sind. Das diese Aufweitung besitzende aufgeschobene Rohrstück 22 besitzt an seinem äußeren Ende darüber hinaus eine Aufbiegung 23, die das Aufschieben auf das Ende des Rohrstücks 21 erleichtert.

Bei dem in Fig. 8 dargestellten Ausführungsbeispiel sind die Ausgangsrille 36, die Rastrille 39 und der Überrollabschnitt 38 in Form einer Einziehung am Ende eines Rohrkrümmers 32 angeordnet, der in ein geradliniges Rohrstück 31 eingeschoben ist. In der Rastrille 39 befindet sich der Dichtring 37, der zwischen dem Boden der Rastrille und dem übergeschobenen Rohrstück 31 auf einen Teil seines ursprünglichen Durchmessers zusammengepreßt ist. In diesem Fall hat der eingeschobene Rohrkrümmer 32 an seinem eingeschobenen Ende eine geringfügige Verjüngung 33, um das Einschieben zu erleichtern.

## Patentansprüche

1. Steckverbindung von zwei Rohrstücken, insbesondere Blechrohren, bei welchen das eine Rohrstück mit seinem Rohrende auf das Rohrende des anderen Rohrstückes aufgeschoben ist, wobei
- sich in dem zwischen den Rohrwandungen der beiden Rohrstücke gegebenen Ringspalt ein Dichtungsring (7, 27, 37) befindet, der auf einen Teil seines ursprünglich runden Durchmessers zusammengepreßt ist und beim Aufschieben des einen Rohrstückes von einer am Ende eines der beiden Rohrstücke vorgesehenen Ausgangsrille (6, 26, 36) über einen Überrollwandabschnitt (8, 28, 38) in eine am selben Rohrstück vorgesehene Rastrille (9, 29, 39) überrollbar ist, deren Boden höher liegt als der Boden der Ausgangsrille; und
- der Boden (10) der Rastrille (9, 29, 39) eine in Achsrichtung des diese Rille aufweisenden Rohrstücks (2, 22, 32) gemessene Breite hat, die mindestens so groß ist wie die Breite des von ihm und der gegenüberliegenden Wand des anderen Rohrstückes (1, 15, 21, 31) zusammengepreßten Dichtungsringes (7, 27, 37);
**gekennzeichnet** durch folgende Merkmale:
a) der radiale Abstand zwischen dem Boden (10) der Rastrille (9, 29, 39) in dem einen Rohrstück (2, 22, 32) und der gegenüberliegenden Wand des anderen Rohrstückes (1, 15, 21, 31) ist kleiner als zwei Drittel des Durchmessers des ursprünglich runden Dichtungsringes (7, 27, 37) im ungepreßten Zustand;
b) der Boden (10) der Rastrille (9, 29, 39) erstreckt sich im wesentlichen parallel zur Achse (X) des diese Rastrille aufweisenden Rohrstücks (2, 22, 32);
c) die Ausgangsrille (6, 26, 36) ist gegenüber dem anschließenden Überrollwandabschnitt (8, 28, 38) geringfügig vertieft; und
d) die der Ausgangsrille (6, 26, 36) zugewandte Seitenwand der Rastrille (9, 29, 39) erstreckt sich über einen wesentlichen Teil ihrer Höhe senkrecht oder angenähert senkrecht zur Achse (X) des diese Rillen aufweisenden Rohrstücks (2, 22, 32).

2. Steckverbindung nach Anspruch 1, dadurch gekennzeichnet, daß der radiale Abstand zwischen dem Boden (10) der Rastrille (9, 29, 39) in dem einen Rohrstück (2, 22, 32) und der gegenüberliegenden Wand des anderen Rohrstückes (1, 15, 21, 31) etwa so groß ist wie der halbe Durchmesser des ursprünglich runden Dichtungsringes (7, 27, 37) im ungepreßten Zustand.

3. Steckverbindung nach Anspruch 1, dadurch gekennzeichnet, daß die der Ausgangsrille (6, 26, 36) zugewandte Seitenwand der Rastrille (9, 29, 39) an ihrem äußeren Rand in Form einer Schulter (11) im wesentlichen kantig ausgebildet ist.

4. Steckverbindung nach den Ansprüchen 1 und 3, dadurch gekennzeichnet, daß sich zwischen der Ausgangsrille (6, 26, 36) und der Rastrille (9, 29, 39) des einen Rohrstücks (2, 22, 32) ein vom Dichtungsring (7, 27, 37) beim Steckverbinden überrollbarer Wandabschnitt (8, 28, 38) befindet, an dessen der Rastrille benachbartem Rand eine ringförmige Schwelle vorgesehen ist, die in Form einer scharfen Biegung in die Seitenwand der anschließenden Rastrille übergeht.

5. Steckverbindung nach Anspruch 4, dadurch gekennzeichnet, daß der Überrollwandabschnitt (8, 28, 38) zur Rastrille (9, 29, 39) hin im wesentlichen kontinuierlich ansteigt.

6. Steckverbindung nach Anspruch 1, dadurch gekennzeichnet, daß die der Ausgangsrille (6, 26, 36) zugewandte Seitenwand der Rastrille (9, 29, 39) eine Höhe von mindestens einem Drittel, vorzugsweise etwa der Hälfte des Abstandes zwischen dem Boden (10) der Rastrille und der gegenüberliegenden Wand des anderen Rohrstücks (1, 15, 21, 31) hat.

7. Steckverbindung nach Anspruch 1, dadurch gekennzeichnet, daß der Boden (10) der Rastrille (9, 29, 39) eine in Achsrichtung des diese Rastrille aufweisenden Rohrstücks (2, 22, 32) gemessene Breite hat, die größer ist als die Breite des von diesem Boden und der darüberliegenden Wand des anderen Rohrstücks (1, 15, 21, 31) zusammengepreßten Dichtungsringes (7, 27, 37).

8. Steckverbindung nach Anspruch 7, dadurch gekennzeichnet, daß der Boden der Rastrille (9, 29, 39) eine in Achsrichtung des diese Rastrille aufweisenden Rohrstücks (2) gemessene Breite von etwa dem 1 1/2-fachen Durchmesser des ursprünglichen runden Dichtungsringes (7, 27, 37) in ungepreßtem Zustand hat.

9. Steckverbindung nach Anspruch 1, dadurch gekennzeichnet, daß der Dichtungsring (7, 27, 37) ist aus einer Rundschnur mit einer im Inneren geschlossenzelligen Struktur, z.B. Moosgummi oder Schaumgummi, und einer glatten Außenhaut gebildet ist.

10. Steckverbindung nach Anspruch 1, dadurch gekennzeichnet, daß die Ausgangsrille (6, 26, 36), die Rastrille (9, 39) und der dazwischen befindliche Überrollwandabschnitt (8, 38) an dem Rohrende desjenigen Rohrstückes (2, 32) vorgesehen sind, auf das das andere Rohrstück (1, 31) aufgeschoben ist, wobei die vorgenannten Rillen durch Einziehungen im Rohrstück (2, 32) gebildet sind (Fig. 1, 4 und 8).

11. Steckverbindung nach Anspruch 1, dadurch gekennzeichnet, daß die Ausgangsrille (26), die Rastrille (29) und der dazwischen befindliche Überrollwandabschnitt (28) in dem aufgeschobenen Rohrstück (22) angeordnet und durch entsprechende Aufweitungen des Rohrstücks gebildet sind (Fig. 7).

12. Steckverbindung nach Anspruch 1, dadurch gekennzeichnet, daß je eine Ausgangsrille (6), eine Rastrille (9) und ein dazwischen befindlicher Überrollwandabschnitt (8) an beiden Enden eines rohrförmigen Verbindungsstücks (2, 16) angeordnet sind, an dessen beide Rohrenden die zu verbindenden Rohrstücke (1, 15) auf- oder eingeschoben sind (Fig. 1 und 4).

## Claims

1. Plug connection for two lengths of pipe, especially sheet metal pipes, in which one length of pipe is pushed by its pipe end on to the pipe end of the other length of pipe
- there being located in the annular gap provided between the pipe walls of both lengths of pipe a sealing ring (7, 27, 37) which is compressed to a part of its original circular diameter and can be rolled over on pushing on one of the lengths of pipe from an initial groove (6, 26, 36) provided at the end of one of the two lengths of pipe via a roll-over wall section (8, 28, 38) into a stop groove (9, 29, 39) provided on the same length of pipe, the base of which is positioned higher than the base of the initial groove; and
- the base (10) of the stop groove (9, 29, 39) having in the axial direction of the length of pipe (2, 22, 32) comprising this groove a measured width which is at least as great as the width of the sealing ring (7, 27, 37) compressed by it and the wall located opposite in the other length of pipe (1, 15, 21, 31);
**characterised** by the following characteristics:
a) the radial distance between the base (10) of the stop groove (9, 29, 39) in one of the lengths of pipe (2, 22, 32) and the opposite wall of the other length of pipe (1, 15, 21, 31) is smaller than two thirds of the diameter of the original circular sealing ring (7, 27, 37) in the uncompressed state;
b) the base (10) of the stop groove (9, 29, 39) extends essentially parallel to the axis (X) of the length of pipe (2, 22, 32) comprising this stop groove;
c) the initial groove (6, 26, 36) is sunk slightly with respect to the adjoining roll-over wall section (8, 28, 38); and
d) the side wall of the stop groove (9, 29, 39) facing towards the initial groove (6, 26, 36) extends over a substantial part of its height vertically or nearly vertically to the axis (X) of the length of pipe (2, 22, 32) comprising these grooves.

2. Plug connection according to Claim 1, characterised in that the radial distance between the base (10) of the stop groove (9, 29, 39) in one of the lengths of pipe (2, 22, 32) and the wall located opposite in the other length of pipe (1, 15, 21, 31) is approximately as great as half of the diameter of the original circular sealing ring (7, 27, 37) in the uncompressed state.

3. Plug connection according to Claim 1, characterised in that at its outer edge the side wall of the stop groove (9, 29, 39) facing towards the initial groove (6, 26, 36) is constructed in the form of a shoulder (11) which is essentially angular.

4. Plug connection according to Claims 1 and 3, characterised in that located between the initial groove (6, 26, 36) and the stop groove (9, 29, 39) of one of the lengths of pipe (2, 22, 32) there is a wall section (8, 28, 38) over which the sealing ring (7, 27, 37) can roll during the plug connection and at the edge of which adjacent to the stop groove an annular sill is provided which passes over in the shape of a sharp bend into the side wall of the adjoining stop groove.

5. Plug connection according to Claim 4, characterised in that the roll-over wall section (8, 28, 38) rises essentially continuously towards the stop groove (9, 29, 39).

6. Plug connection according to Claim 1, characterised in that the side wall of the stop groove (9, 29, 39) facing towards the initial groove (6, 26, 36) has a height of at least a third, preferably approximately half of the distance between the base (10) of the stop groove and the wall located opposite in the other length of pipe (1, 15, 21, 31).

7. Plug connection according to Claim 1, characterised in that in the axial direction of the length of pipe (2, 22, 32) comprising the stop groove, the base (10) of this stop groove (9, 29, 39) has a measured width which is greater than the width of the sealing ring (7, 27, 37) compressed by this base and the wall located opposite in the other length of pipe (1, 15, 21, 31).

8. Plug connection according to Claim 7, characterised in that in the axial direction of the length of pipe (2) comprising the stop groove, the base of this stop groove (9, 29, 39) has a measured width of approximately 1 1/2 times the diameter of the original circular sealing ring (7, 27, 37) in the uncompressed state.

9. Plug connection according to Claim 1, characterised in that the sealing ring (7, 27, 37) is formed from a circular loop having a closed cellular structure in its interior, eg microcellular rubber or foam rubber, and a smooth outer skin.

10. Plug connection according to Claim 1, characterised in that the initial groove (6, 26, 36), the stop groove (9, 39) and the roll-over wall section (8, 38) located between them are provided at the pipe end of that length of pipe (2, 32) on to which the other length of pipe (1, 31) is pushed, the aforementioned grooves being formed by means of taperings in the length of pipe (2, 32; Figs 1, 4 and 8).

11. Plug connection according to Claim 1, characterised in that the initial groove (26), the stop groove (29) and the roll-over wall section (28) located between them are arranged in the length of pipe (22) pushed on and are formed by corresponding widenings of the length of pipe (Fig 7).

12. Plug connection according to Claim 1, characterised in that an initial groove (6), a stop groove (9) and a roll-over wall section (8) located between them are arranged at each of the two ends of a tubular connecting piece (2, 16), at both pipe ends of which the lengths of pipe (1, 15) to be connected are pushed on or pushed in (Figs 1 and 4).

## Revendications

1. Raccord à enfichage de deux éléments tubulaires, en particulier tubes façonnés à partir de tôle, pour lesquels un premier élément tubulaire est enfilé, par son extrémité tubulaire, sur l'extrémité tubulaire de l'autre élément tubulaire, où
- dans l'interstice annulaire constitué entre les parois tubulaires des deux éléments tubulaires se trouve une bague d'étanchéité (7, 27, 37) qui est comprimée sur une partie de son diamètre initialement rond et est susceptible d'être roulée, lors de l'enfilement d'un élément tubulaire, depuis une cannelure de départ (6, 26, 36) prévue à l'extrémité de l'un des deux éléments tubulaires, le roulement se faisant avec passage sur sa section de paroi à franchissement par roulement (8, 28, 38), avec introduction dans une cannelure d'encliquetage (9, 29, 39) prévue sur le même élément tubulaire, cannelure d'encliquetage dont le fond est situé à un niveau plus élevé que le fond de la cannelure de départ; et
- le fond (10) de la cannelure d'encliquetage (9, 29, 39) a une largeur, mesurée dans la direction axiale de l'élément tubulaire (2, 22, 32) présentant cette cannelure, qui est au moins de la valeur de la largeur de la bague d'étanchéité (7, 27, 37) comprimé par celui-ci et par la paroi placée, en regard, de l'autre élément tubulaire (1, 15, 21, 31);
caractérisé par les propriétés ci-après :
a) l'espacement radial entre le fond (10) de la cannelure d'encliquetage (9, 29, 39) se trouvant dans le premier élément tubulaire (2, 22, 32) et la paroi, placée en regard, de l'autre élément tubulaire (1, 15, 21, 31) est inférieure à deux tiers du diamètre de la bague d'étanchéité (7, 27, 37) initialement ronde, lorsqu'elle est à l'état non pressé;
b) le fond (10) de la cannelure d'encliquetage (9, 29, 39) s'étend sensiblement parallèlement à l'axe (X) de l'élément tubulaire (2, 22, 32) présentant cette cannelure d'encliquetage;
c) la cannelure de départ (6, 26, 36) est légèrement en profondeur vis-à-vis de la section de paroi à franchissement par roulement (8, 28, 38) connexe; et
d) la paroi latérale, tournée vers la cannelure de départ (6, 26, 36), de la cannelure d'encliquetage (9, 29, 39) s'étend sur une partie notable de sa hauteur, perpendiculairement ou à peu près perpendiculairement par rapport à l'axe (X) de l'élément tubulaire (2, 22, 32) présentant ces cannelures.

2. Raccord à enfichage selon la revendication 1, caractérisé en ce que l'espacement radial entre le fond (10) de la cannelure d'encliquetage (9, 29, 39) dans un premier élément tubulaire (2, 22, 32) et la paroi en regard de l'autre élément tubulaire (1, 15, 21, 31) est à peu près de la même valeur que la moitié du diamètre de la bague d'étanchéité (7, 27, 37) initialement ronde, lorsqu'elle est à l'état non pressé.

3. Raccord à enfichage selon la revendication 1, caractérisé en ce que la paroi latérale, tournée vers la cannelure de départ (6, 26, 36), de la cannelure d'encliquetage (9, 29, 39), est réalisée de façon sensiblement polygonale, sous la forme d'un épaulement (11) formé sur son bord extérieur.

4. Raccord à enfichage selon les revendications 1 et 3, caractérisé en ce que, entre la cannelure de départ (6, 26, 36) et la cannelure d'encliquetage (9, 29, 39) d'un premier élément tubulaire (2, 22, 32), se trouve une section de paroi (8, 28, 38) pouvant être franchie avec un mouvement de roulement lors de la liaison par enfichage, section de paroi, sur le bord, voisin de la section d'encliquetage, de laquelle est prévu un seuil annulaire réalisé sous la forme d'une courbure à forme vive et se transformant en la paroi latérale de la cannelure d'encliquetage connexe.

5. Raccord à enfichage selon la revendication 4, caractérisé en ce que la section de paroi à franchissement par roulement (8, 28, 38) monte de façon continue en allant vers la cannelure d'encliquetage (9, 29, 39).

6. Raccord à enfichage selon la revendications 1, caractérisé en ce que la paroi latérale, tournée vers la cannelure de départ (6, 26, 36), de la cannelure d'encliquetage (9, 29, 39) a une hauteur d'au moins un tiers, de préférence à peu près de la moitié, de l'espacement entre le fond (10) de la cannelure d'encliquetage et la paroi en regard de l'autre élément tubulaire (1, 15, 21, 31).

7. Raccord à enfichage selon la revendication 1, caractérisé en ce que le fond (10) de la cannelure d'encliquetage (9, 29, 39) a une largeur, mesurée dans la direction axiale de l'élément tubulaire (2, 22, 32) présentant cette cannelure d'encliquetage, qui est supérieure à la largeur de la bague d'étanchéité (7, 27, 37) comprimée par ce fond et la paroi, située dessus, de l'autre élément tubulaire (1, 15, 21, 31).

8. Raccord à enfichage selon la revendication 7, caractérisé en ce que le fond de la cannelure d'encliquetage (9, 29, 39) a une largeur, mesurée dans la direction axiale de l'élément tubulaire (2) présentant cette cannelure d'encliquetage, qui est d'environ 1,5 fois le diamètre de la bague d'étanchéité (7, 27, 37) initialement ronde, lorsqu'elle est à l'état non pressé.

9. Raccord à enfichage selon la revendication 1, caractérisé en ce que la bague d'étanchéité (7, 27, 37) est constituée d'un cordon rond ayant une structure à cellule fermée dans l'intérieur de la masse, par exemple un caoutchouc mousse ou un caoutchouc alvéolaire et une peau extérieure lisse.

10. Raccord à enfichage selon la revendication 1, caractérisé en ce que la cannelure de départ (6, 26, 36), la cannelure d'encliquetage (9, 39) et la section de paroi à franchissement par roulement (8, 38) se trouvant en position intermédiaire sont prévues sur l'extrémité tubulaire de l'élément tubulaire (2, 32) sur lequel est enfilé l'autre élément tubulaire (1, 31), les cannelures précitées étant constituées par des étranglements réalisés dans la pièce tubulaire (2, 32) (figures 1, 4 et 8).

11. Raccord à enfichage selon la revendication 1, caractérisé en ce que la cannelure de départ (26), la cannelure d'encliquetage (29) et la section de paroi à franchissement par roulement (28) se trouvant en position intermédiaire sont disposées dans l'élément tubulaire (22) femelle de la liaison à enfilement et sont constituées par des agrandissements correspondants de l'élément tubulaire (figure 7).

12. Raccord à enfichage selon la revendication 1, caractérisé en ce qu'une cannelure de départ (6), une cannelure d'encliquetage (9) et une section de paroi à franchissement par roulement (8) se trouvant en position intermédiaire sont disposées aux deux extrémités d'un élément de liaison (2, 16) tubulaire, aux deux extrémités tubulaires duquel sont enfilés extérieurement ou introduits intérieurement les éléments tubulaires (1, 15) en cours de liaison (figures 1 et 4).
